# EUROPÄISCHE PATENTSCHRIFT

(11) **EP 2 100 806 B1**
(45) Veröffentlichungstag und Bekanntmachung des Hinweises auf die Patenterteilung: **22.02.2012**
(21) Anmeldenummer: 09003436.4
(22) Anmeldetag: 10.03.2009
(51) Int. Cl.: B62K 25/02

(54) **Fahrradkomponente**
Bicycle component
Composant de bicyclette

(30) Priorität: 12.03.2008 DE 102008013938
(43) Veröffentlichungstag der Anmeldung: 16.09.2009
(73) Patentinhaber: DT Swiss AG, 2500 Biel (CH)
(72) Erfinder: Spahr, Stefan, CH-2543 Lengau (CH); Achenbach, Martin, 2503 Biel (CH)
(74) Vertreter: Schütte, Hartmut

(56) Entgegenhaltungen:
- EP-A- 1 953 008
- CN-Y- 2 442 926
- US-A- 4 632 415

## Beschreibung

Die vorliegende Erfindung betrifft eine System zur Laufradaufnahme und insbesondere eine Fahrradkomponente mit einer Laufradaufnahme, an der ein Laufrad mit einer Nabe aufnehmbar ist, sowie eine Fahrradkomponente mit einem an einer Laufradaufnahme aufgenommenen Laufrad. Beispielsweise kann die erfindungsgemäße Fahrradkomponente als Vorderradgabel oder als Fahrradrahmen ausgeführt sein, woran ein Laufrad aufnehmbar ist.

Im Stand der Technik sind Fahrradkomponenten bekannt geworden an denen ein Laufrad aufnehmbar ist. Beispielsweise sind Vorderradgabeln bekannt geworden, bei denen die am unteren Ende der Standrohre vorgesehenen Ausfallenden mit einem Aufnahmeschlitz vorgesehen sind, in die eine feststehende Achse einer Nabe eines Laufrades eingeführt werden kann, um das Laufrad an der Gabel zu befestigen.

Aus der US 4,632,415 auf der die jeweiligen Oberbegriffe der Ansprüche 1 und 2 basieren ist eine Vorderradgabel mit integrierter Lagerung bekannt geworden. Dabei ist in den Ausfallenden jeweils ein Lager mit äußeren und inneren Lagerschalen und Kugeln zur Lagerung dazwischen vorgesehen. Die Lager sind in den Enden der Vorderradgabel befestigt und nehmen die Achse auf.

Bei Einsatz einer Steckachse wird die Steckachse durch die Nabe und die Ausfallenden der Gabel durchgesteckt und die Steckachse wird mit einem Ausfallende der Vorderradgabel verschraubt. Alternativ dazu kann ein Schnellspanner eingesetzt werden, der durch die hohle Achse der Nabe durchgeführt wird und auf den Außenseiten der Ausfallenden die Ausfallenden gegen die feststehende Achse drückt und das Laufrad somit an der Vordergabel festklemmt.

Die Anforderungen an die Belastbarkeit von Fahrrädern wachsen zunehmend. Insbesondere beim Fahren mit einem Mountainbike im Gelände oder auf der Straße legt der Benutzer Wert drauf, dass bei Hindernissen auf dem Weg eine feste und steife Verbindung zwischen Lenker und Vorderrad vorliegt, sodass trotz eines Steines oder eines sonstigen Hindernisses der Lenker den Lenkbewegungen des Benutzers exakt folgt und nicht aufgrund von mangelnder Steifigkeit tordiert.

Zur Erhöhung der Klemmwirkung werden oft Rändelscheiben an der Kontaktfläche zwischen Ausfallende und der feststehende Achse eingesetzt, die sich aufgrund Ihrer gerändelten Oberfläche in die Oberfläche des Ausfallendes einfressen und somit für einen festen Kontakt sorgen.

Nachteilig bei der Verwendung von Rändelscheiben ist allerdings, dass nach wiederholtem Ein- und Ausbauen des Laufrades die Oberflächen des Ausfallendes unter den auftretenden Belastungen leiden, sodass die Vorderradgabel oder der Fahrradrahmen unbrauchbar werden können, obwohl die Belastungsgrenze der einzelnen Komponenten noch lange nicht erreicht ist.

Auch ohne Verwendung von Rändelscheiben kommt es bei wiederholtem Ein- und Ausbauen des Laufrades zum Verschleiß der Kontakt- und Auflageflächen.

Zur Verringerung des Verschleißes kann man versuchen, die belasteten Oberflächen zu härten oder aus einem stabileren und festen Material herzustellen.

So ist z. B. aus der DE 76 10 061 U eine Befestigungsanordnung von Achsen an einem Zwei- oder Dreirad bekannt geworden, bei der in die Langlöcher der Ausfallenden im Querschnitt hutförmige Buchsen eingebracht sind, an denen jeweils eine axiale Endscheibe zur Anlage der Befestigungsmuttern vorgesehen ist, wobei die Endscheibe als Unterlegscheibe fungiert. Nachteilig an dieser bekannten Lösung sind unter anderem das erhöhte Gewicht und der Einsatz zusätzlicher Teile.

Die bekannten Lösungen sind unbefriedigend, da sie gegebenenfalls die Festigkeit der Verbindung beeinträchtigen oder das Gewicht erhöhen. Zudem tritt auch dann noch Verschleiß auf. Weiterhin wird die Anzahl der Teile und damit der Aufwand beim Austausch eines Rades erhöht.

Die ältere europäische Patentanmeldung EP 1 953 008 A1 zeigt eine Befestigungsstruktur für ein Rad eines Fahrrads, bei dem in den Gabelenden der Vorderradgabel Adapter vorgesehen sind, um die Achse darin aufzunehmen. Einer der Adapter nimmt auf einem axialen Teilstück die Achse dicht auf, während das andere axiale Teilstück mit einem Innengewinde versehen ist, um das Ende der Achse einzuschrauben.

Es ist deshalb die Aufgabe der vorliegenden Erfindung eine Fahrradkomponente zur Verfügung zu stellen, welche eine einfache und sichere Verbindung mit einem Laufrad ermöglicht und eine hohe Lebensdauer aufweist, wobei der Montageaufwand beim Austausch eines Rades gering ist.

Diese Aufgabe wird gelöst durch eine Fahrradkomponente mit den Merkmalen des Anspruchs 1, des Anspruchs 2, sowie durch eine Fahrradgabel mit den Merkmalen des Anspruchs 15. Bevorzugte Weiterbildungen der Erfindung sind Gegenstand der Unteransprüche. Weitere Vorteile und Merkmale ergeben sich aus dem Ausführungsbeispiel.

Die erfindungsgemäße Fahrradkomponente weist eine Laufradaufnahme auf, an der ein Laufrad mit der Nabe des Laufrades aufnehmbar ist. Die Laufradaufnahme umfasst wenigstens zwei Rohrteile, an deren Endbereichen jeweils eine Aufnahmeeinrichtung vorgesehen ist, die jeweils mit wenigstens einer Buchseneinrichtung versehen sind. An der Aufnahmeeinrichtung wenigstens eines Rohrteils ist wenigstens eine Buchseneinrichtung austauschbar angeordnet, wobei die Buchseneinrichtung zur Aufnahme und Abstützung einer Nabe geeignet und bestimmt ist. Die Buchseneinrichtung der einen Aufnahmeeinrichtung weist einen Passsitz auf dem Innenumfang auf. Die Buchseneinrichtung der anderen Aufnahmeeinrichtung weist einen Passsitz auf dem Innenumfang und axial benachbart dazu ein Innengewinde auf, wobei sich der Passsitz und das Innengewinde jeweils nur über einen Teil der axialen Länge der Buchseneinrichtung der anderen Aufnahmeeinrichtung erstrecken. Beispielsweise ist an einem Ende der jeweiligen Rohrteile jeweils eine Aufnahmeeinrichtung vorgesehen, in der die Buchseneinrichtung austauschbar angeordnet ist. Dabei weisen die Aufnahmeeinrichtungen jeweils axial nach innen hin einen axialen Überstand als Auflager auf.

Eine weitere erfindungsgemäße Fahrradkomponente weist eine Laufradaufnahme auf, an der ein Laufrad mit einer Nabe aufnehmbar ist. Die Laufradaufnahme umfasst wenigstens zwei Rohrteile, an deren Endbereichen jeweils eine Aufnahmeeinrichtung mit jeweils wenigstens einer Buchseneinrichtung vorgesehen ist. Dabei ist an der Aufnahmeeinrichtung wenigstens eines Rohrteils wenigstens eine Buchseneinrichtung austauschbar angeordnet, welche zur Aufnahme und Abstufung einer Nabe geeignet und bestimmt ist. Die Buchseneinrichtung der einen Aufnahmeeinrichtung weist einen Passsitz auf dem Innenumfang auf. Die Buchseneinrichtung der anderen Aufnahmeeinrichtung weist einen Passsitz auf dem Innenumfang und axial benachbart dazu ein Innengewinde auf, wobei sich der Passsitz und das Innengewinde jeweils über einen Teil der axialen Länge der Buchseneinrichtung erstrecken. Dabei weist die Buchseneinrichtung der anderen Aufnahmeeinrichtung eine innere Umfangsnut mit einem O-Ring auf.

Die erfindungsgemäße Fahrradkomponente hat viele Vorteile. Ein erheblicher Vorteil der erfindungsgemäßen Fahrradkomponente ist, dass das Laufrad über die Nabe des Laufrades an der Buchseneinrichtung aufgenommen und abgestützt ist.

Insbesondere ist die Nabe nur an der Buchseneinrichtung aufgenommen und abgestützt, sodass die Nabe und das Laufrad insgesamt bei einem in die Laufradaufnahme eingesetzten Zustand nur mit der Buchse in Berührung kommt und nicht mit anderen Teilen der Fahrradkomponente. Das sorgt dafür, dass der Verschleiß beim Ein- und Ausbauen des Laufrades erheblich reduziert wird, sodass die Lebensdauer der Fahrradkomponente vergrößert wird. Wenn die Buchseneinrichtung oder deren Kontaktoberfläche dennoch verschlissen ist, kann die Buchseneinrichtung ausgetauscht werden, sodass eine praktisch neuwertige Fahrradkomponente zur Verfügung steht. Ein Austausch der gesamten Fahrradkomponente ist hingegen nicht nötig, nur wenn die Kontaktflächen zu den Rändelscheiben der Nabe verschlissen sind.

Ein besonderer Vorteil wird durch den Passsitz auf dem Innenumfang der einen Buchseneinrichtung gewährleistet, denn dieser Passsitz erlaubt ein Durchstecken einer Steckachse von der einen Buchseneinrichtung aus. Der Passsitz auf dem Innenumgang der Buchseneinrichtung der anderen Aufnahmeeinrichtung ermöglicht einen insgesamt festen und spielfreien Halt der Steckachse an beiden Aufnahmeeinrichtungen. Das axial benachbart dazu vorgesehene Innengewinde ermöglicht eine direkte verschraubung einer Steckachse mit der Buchseneinrichtung. Dadurch, dass sich der Passsitz und das Innengewinde nur über einen Teil der axialen Länge der Buchseneinrichtung der anderen Aufnahmeeinrichtung erstrecken, wird eine besonders einfache Montage ermöglicht. Bei einem Austausch des Rades verbleiben die Buchseneinrichtungen in den Aufnahmeeinrichtungen. Es werden weniger verlierbare Teile eingesetzt, da beim Austausch eines Rades das Innengewinde zum Festschrauben der Steckachse mit der Buchseneinrichtung in der Aufnahmeeinrichtung verbleibt.

Demgegenüber führen im Stand der Technik häufigere Wechsel des Laufrades dazu, dass auch die radialen Kontaktflächen zwischen einer Steckachse und der Gabel belastet werden und verschleißen, sodass nach einer Vielzahl von Wechselvorgängen sich ein größeres Spiel einstellt, was zu einer geringeren Steifigkeit der bekannten Fahrradkomponenten führt.

Die vorliegende Erfindung ermöglicht durch einen einfachen Austausch der Buchseneinrichtung eine erheblich vergrößerte Lebensdauer und einen verbesserten Sitz des Laufrades an der Fahrradkomponente, da die Buchseneinrichtung nach einem geringen Verschleiß ausgetauscht werden kann. Der Aufwand ist erheblich geringer als der Austausch der kompletten Komponente.

Weiterhin kann die Buchseneinrichtung aus einem besseren Material gefertigt werden, da insgesamt nur wenig Masse eingesetzt werden muss. Ebenso kann auch die Oberflächenqualität verbessert werden und der Aufwand bezüglich der Oberflächenbearbeitung der Buchseneinrichtung erhöht werden, um insgesamt eine hochqualitativere Buchseneinrichtung und somit Fahrradkomponente zur Verfügung zu stellen.

Es ist sowohl an der einen Aufnahmeeinrichtung auf der einen Seite als auch auf der anderen Aufnahmeeinrichtung auf der anderen Seite des Laufrades wenigstens eine Buchseneinrichtung angeordnet.

Vorteilhafterweise weist wenigstens eine Buchseneinrichtung ein Außengewinde auf, welches sich insbesondere nur über einen Teil der axialen Länge der Buchseneinrichtung erstreckt. Über ein Außengewinde, welches insbesondere mit einem entsprechenden Innengewinde der Aufnahmeeinrichtung korrespondiert, kann eine einfache und zuverlässige Verbindung der Buchseneinrichtung mit der Aufnahmeeinrichtung zur Verfügung gestellt werden.

Vorzugsweise weist wenigstens eine Buchseneinrichtung einen Passsitz auf der Außenseite auf. Es ist möglich, dass sich der Passsitz nur über einen Teil der axialen Länge der Buchseneinrichtung erstreckt. Möglich und bevorzugt ist es aber auch, dass der Passsitz sich über die gesamte Länge der Buchseneinrichtung erstreckt. Möglich ist es auch, dass die Buchseneinrichtung auf der einen Seite einen Passsitz über die gesamte Länge aufweist, während die Buchseneinrichtung auf der anderen Seite einen Passsitz aufweist, der sich nur über einen Teil, beispielsweise etwa die Hälfte der Länge der Buchseneinrichtung erstreckt.

In anderen Ausgestaltungen oder zusätzlich dazu kann die Buchseneinrichtung in die Aufnahmeeinrichtung eingeklebt sein. Es ist auch möglich, dass die Buchseneinrichtung in der Aufnahmeeinrichtung formschlüssig aufgenommen und gegebenenfalls zusätzlich eingeklebt wird. Zusätzlich dazu kann die Buchseneinrichtung über geeignete Mittel verklemmt werden. Es kann auch eine formschlüssige Aufnahme beispielsweise über eine Sechskantgestaltung oder eine Vierkantgestaltung gewählt werden, um die Buchseneinrichtung sicher in der Aufnahmeeinrichtung zu halten.

Besonders bevorzugt ist eine Buchseneinrichtung, bei der sich ein Passsitz über einen Längsbereich erstreckt, an dem sich ein Außengewinde über einen weiteren Längsbereich anschließt. Dabei ist ein Außendurchmesser des Außengewindes insbesondere kleiner als ein Außendurchmesser der Buchseneinrichtung im Bereich des Passsitzes auf der Außenseite. Vorzugsweise ist der Bereich.des Außengewindes der Buchseneinrichtung auf einer axialen Außenseite vorgesehen, sodass der Bereich des Passsitzes näher an einem aufgenommenen Laufrad angeordnet ist als der Bereich des Außengewindes.

In allen Ausgestaltungen ist es bevorzugt, dass wenigstens eine Buchseneinrichtung wenigstens eine axiale Anlagefläche aufweist, wobei an einer axiale Anlagefläche die Nabe gestützt und gehalten wird.

In vorteilhaften Ausgestaltungen weist die Buchseneinrichtung der einen Aufnahmeinrichtung einen Passsitz auf dem Innenumfang auf, der sich über die gesamte Länge der Buchseneinrichtung erstreckt.

Insbesondere weist die Buchseneinrichtung der anderen Aufnahmeeinrichtung einen Passsitz auf dem Innenumfang und axial benachbart dazu ein Innengewinde auf, wobei sich der Passsitz und das Innengewinde jeweils über einen Teil der axialen Länge der Buchseneinrichtung erstrecken.

Wird beispielsweise eine Steckachse eingesetzt, so kann das mit einem Außengewinde versehene vordere Ende der Steckachse durch die eine Buchseneinrichtung durchgesteckt und in die andere Buchseneinrichtung eingeführt werden, bis der Außengewindebereich der Steckachse das Innengewinde der anderen Buchseneinrichtung erreicht. Dort kann die Steckachse dann mit der Buchseneinrichtung der anderen Aufnahmeeinrichtung verschraubt werden, sodass die Steckachse sicher an der Fahrradkomponente aufgenommen wird. Eine zusätzliche Befestigungsmutter ist nicht erforderlich.

Die Buchseneinrichtung wenigstens der anderen Aufnahmeeinrichtung weist eine innere Umfangsnut auf, in der ein O-Ring eingesetzt ist. Dadurch wird eine zusätzliche Verliersicherung erzielt, da eine Drehung der eingeführten Achse durch den O-Ring gehemmt wird.

In allen Ausgestaltungen ist es bevorzugt, dass sowohl die eine als auch die andere Aufnahmeeinrichtung jeweils eine zylindrische Aufnahmeöffnung zur Aufnahme der Buchseneinrichtung aufweist.

Beide Aufnahmeinrichtungen weisen jeweils axial nach innen einen axialen Überstand oder Vorsprung als Auflager für die Nabe im ungespannten Zustand auf, um das Einführen einer Achse zu erleichtern.

Das Auflager kann insbesondere sichelförmig gestaltet sein und im Wesentlichen auf der Oberseite der Aufnahmeeinrichtung vorgesehen sein. Das hat den Vorteil, dass ein Laufrad mit seiner Nabe in die Auflager eines auf dem Kopf stehenden Fahrrades eingelegt werden kann, was das Durchstecken einer Steckachse oder eines Schnellspanners durch die Nabe erheblich erleichtert.

Möglich ist es ebenso, dass sich beim Einbau eines Laufrades die Auflager auf die Nabe des auf den Boden gestellten Laufrades abstützen, sodass der Benutzer das Laufrad und das Fahrrad insgesamt nur leicht mit der Hand halten muss, um die Steckachse oder einen Schnellspanner durch die Buchseneinrichtung einzuführen. Das Einfädeln wird erheblich erleichtert.

Vorzugsweise ist ein Radius der zylindrischen Aufnahmeöffnung gleich einem Radius des axialen Überstandes des Auflagers. Das bietet den Vorteil, dass die zylindrische Aufnahmeöffnung und der axiale Überstand in einem Bearbeitungsschritt hergestellt oder nachgearbeitet werden können, sodass der Herstellungsaufwand verringert wird.

Vorzugsweise ist eine Achseneinrichtung an der Fahrradkomponente vorgesehen und umfasst eine langgestreckte zylindrische Achse. Vorzugsweise weist sie ein insbesondere nach außen abstehendes Bedienteil auf. Möglich ist allerdings auch eine Achseneinrichtung, bei der ein Außensechskant oder dergleichen am Ende vorgesehen oder aufschraubbar ist, um ein Laufrad an der Fahrradkomponente sicher zu befestigen.

Vorzugsweise ist wenigstens ein Außendurchmesser der Achse im Bereich der Buchseneinrichtung wenigsten abschnittsweise an den Innendurchmesser der Buchseneinrichtung angepasst, sodass dort ein Passsitz vorliegt, der eine insbesondere feste und spielfreie Verbindung erlaubt.

In besonders bevorzugten Ausgestaltungen ist die Achse als Steckachseneinrichtung ausgeführt. Dadurch wird eine hohe Stabilität und eine hohe Steifigkeit erreicht, sodass eine mögliche Torsion verringert wird.

Vorteilhafterweise wirkt das Bedienteil mit einem Gewinde zusammen, um bei der Drehung des Bedienteils die Achseneinrichtung zu spannen. Dazu wird die Achse z.B. in eine Buchseneinrichtung eingeschraubt, bis eine axiale Anlagefläche der Achseneinrichtung die Nabe fest einklemmt.

Das Bedienteil ist vorteilhafterweise derart dicht an einem Rohrteil der Fahrradkomponente angeordnet, dass eine Drehung des Bedienteils nur um einen Winkel kleiner als 360 Grad möglich ist, insbesondere wenn die Nabe bzw. das Laufrad nahezu fest eingespannt ist.

Vorzugsweise ist das Bedienteil beim Festziehen zunächst vollständig frei drehbar und nähert sich beim Festziehen an das Rohrteil an, bis das Bedienteil schließlich derart dicht an dem Rohrteil angeordnet ist, dass das Rohrteil in den Schwenkbereich des Bedienteils hineinragt und eine vollständige Drehung des Bedienteils nicht mehr möglich ist.

Vorzugsweise ist das Bedienteil wenigstens dann derart dicht an dem Rohrteil angeordnet, dass das Rohrteil in den Schwenkbereich des Bedienteils hineinragt.

Vorteilhafterweise ist an der Achseneinrichtung ein Ratschenmechanismus vorgesehen, der es insbesondere erlaubt, eine Verschwenkung des Bedienteils zu ermöglichen, die sich nicht auf eine Drehung der Achse auswirkt.

Das Bedienteil wirkt insbesondere mit einem Gewinde zusammen, um bei der Drehung des Bedienteils die Achseneinrichtung zu spannen. Dazu können das Bedienteil und die Achse über eine Längsverzahnung gekoppelt sein.

Vorzugsweise ist das Bedienteil axial gegen die Vorspannkraft einer Vorspanneinrichtung nach außen bewegbar, um die Längsverzahnungen bzw. das Bedienteil außer Eingriff mit der Achse zu bringen. Dadurch wird das Bedienteil drehbar, ohne die Drehbewegung auf die Achse und somit das Gewinde zu übertragen.

Eine weitere erfindungsgemäße Fahrradkomponente weist eine Laufradaufnahme und ein daran aufgenommenes Laufrad oder wenigstens eine daran aufgenommene Nabe auf. Die Nabe weist eine feststehende Achse auf und die Laufradaufnahme umfasst wenigstens zwei Rohrteile, an deren Endbereichen jeweils eine Aufnahmeeinrichtung vorgesehen ist zwischen denen die Nabe aufgenommen und abgestützt ist. In dem Endbereich wenigsten eines Rohrteils der Laufradaufnahme ist wenigstens eine Buchseneinrichtung austauschbar angeordnet, von welcher die feststehende Achse der Nabe aufgenommen ist.

Auch diese erfindungsgemäße Fahrradkomponente hat erhebliche Vorteile, da die Lebensdauer der Fahrradkomponente erfindungsgemäß verlängert wird, während gleichzeitig die Qualität der Verbindung der Fahrradkomponente und des Laufrades verbessert werden kann.

Vorzugsweise liegt die Nabe nur mit stirnseitigen Endflächen an den Buchseneinrichtungen an. Das bedeutet, dass nur die stirnseitigen Endflächen der Nabe mit den Buchseneinrichtungen in Kontakt geraten. Da die Buchseneinrichtungen austauschbar sind, können bei einem Verschleiß der Kontaktflächen die Buchseneinrichtungen ausgetauscht werden, um die Fahrradkomponente wieder in einen qualitativ verbesserten Zustand zu bringen. Vorzugsweise werden die Stirnseiten der Endflächen der Nabe durch Rändelscheiben gebildet, die vorzugsweise gehärtet sind.

An der Nabe können stirnseitig Adapterstücke vorgesehen sein, die die stirnseitigen Endflächen aufweisen können. Vorzugsweise sind die Adapterstücke an der Nabe axial befestigbar. Dabei kann es sein, dass die Adapterstücke auf die axialen Enden der Nabe aufgeschraubt werden oder in eine Hohlachse eingeschoben oder auf eine Nabenachse aufgeschoben werden.

In allen Ausgestaltungen ist es bevorzugt, dass die Aufnahmeeinrichtung die Nabe wenigstens im wesentlichen berührungslos umgibt.

Es ist bevorzugt, dass diese Fahrradkomponente in Weiterbildungen Merkmale der zuvor beschriebenen Fahrradkomponente aufweist.

Die erfindungsgemäße Vorderradgabel umfasst zwei Standrohre und jeweils ein daran vorgesehenes Ausfallende, wobei zwischen den Ausfallenden der beiden Standrohre ein Laufrad mit seiner Nabe aufnehmbar ist. Dabei ist an dem Ausfallende wenigstens eines Standrohrs wenigstens eine Buchseneinrichtung austauschbar angeordnet ist, welche zur Aufnahme und Abstützung einer Nabe eines Laufrads geeignet und bestimmt ist.

Weitere Vorteile und Anwendungsmöglichkeiten der vorliegenden Erfindung ergeben sich aus dem Ausführungsbeispiel, das nun mit Bezug auf die beiliegenden Figuren beschrieben wird.

In den Figuren zeigen:

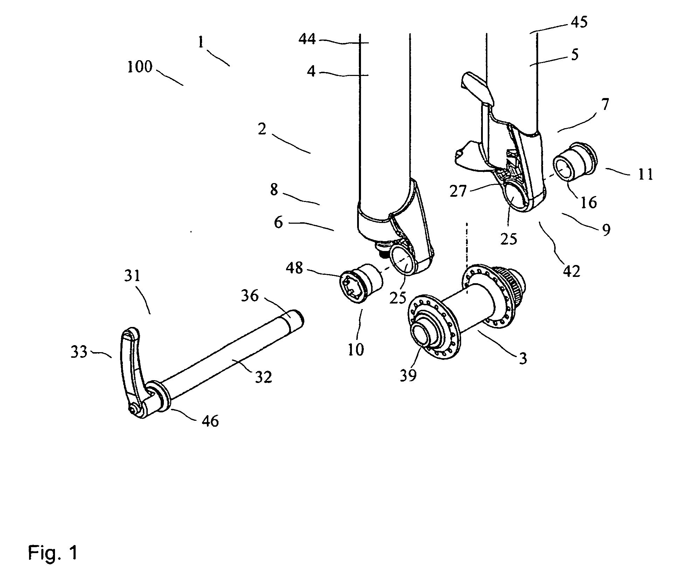

- Fig. 1: eine perspektivische Explosionsansicht einer erfindungsgemäßen Fahrradkomponente;
- Fig. 2: eine perspektivische Ansicht der Fahrradkomponente nach Fig. 1 ohne die Nabe;
- Fig. 3: eine Seitenansicht der Fahrradkomponente nach Fig. 1;
- Fig. 4: einen Querschnitt durch die Fahrradkomponente nach Fig. 1;
- Fig. 5: das Detail B aus Fig. 4 in vergrößerter Darstellung; und
- Fig. 6: das Detail C aus Fig. 4 in vergrößerter Darstellung.

Im folgenden wird nun mit Bezug auf die beiliegenden Figuren ein Ausführungsbeispiel der vorliegenden Erfindung erläutert.

Die erfindungsgemäße Fahrradkomponente 1 ist insbesondere als Vorderradgabel 100 ausgeführt und weist zwei Rohrteile 4, 5 bzw. Standrohre 44, 45 auf, an deren Endbereichen 6, 7 eine Laufradaufnahme 2 mit Aufnahmeeinrichtungen 8, 9 vorgesehen ist, wobei die Aufnahmeeinrichtungen 8, 9 als Ausfallenden 42 dienen.

Zwischen den beiden Rohrteilen 4, 5 ist ein Laufrad aufnehmbar, von welchem hier nur die Nabe 3 dargestellt ist.

In die Aufnahmeeinrichtung 8, 9 bzw. Ausfallenden 42 sind Buchseneinrichtungen 10, 11 eingesetzt, die bei einem Verschleiß der Kontaktflächen einfach austauschbar sind, um eine höhere Standzeit der Fahrradkomponente 1 insgesamt zu erzielen. Verschleiß kann insbesondere an den Kontaktflächen mit der Nabe 3 oder mit der Achseneinrichtung 31 bzw. der Rändelscheibe 46 der Achseneinrichtung 31 auftreten.

Die Buchseneinrichtungen 10, 11 weisen axiale Anlageflächen 16 und 48 auf, an denen die Nabe 3 bzw. die Rändelscheibe 46 der Achseneinrichtung 31 im eingebauten Zustand anliegen. Die Abmessungen sind derart gewählt, dass die Nabe 3 im eingebauten Zustand nur mit Kontaktflächen der Buchseneinrichtungen 10 und 11 in Berührung kommt und nicht mit anderen Teilen der Standrohre 44, 45. Dadurch wird gewährleistet, dass nur die austauschbaren Buchseneinrichtungen 10, 11 einem eventuellen Verschleiß unterliegen. Die Buchseneinrichtungen sind bei Bedarf mit einem geeigneten Werkzeug lösbar und auswechselbar.

Die Achse 32 der Achseneinrichtung 31 weist an dem dem Bedienteil gegenüberliegenden Ende ein Außengewinde 36 auf, welches in ein Innengewinde 20 der Buchseneinrichtung 11 eingreift, um die Achse 32 zu spannen.

Bei der Federgabel 100 bzw. der Fahrradkomponente 1 liegen nur die Außenoberfläche der Achse 32 und die axialen Endflächen 16 und 48 der Buchseneinrichtungen 10, 11 und die axiale Endfläche 46 der Achseneinrichtung 31 aneinander an, sodass Verschleiß nur an austauschbaren Komponenten erfolgen kann.

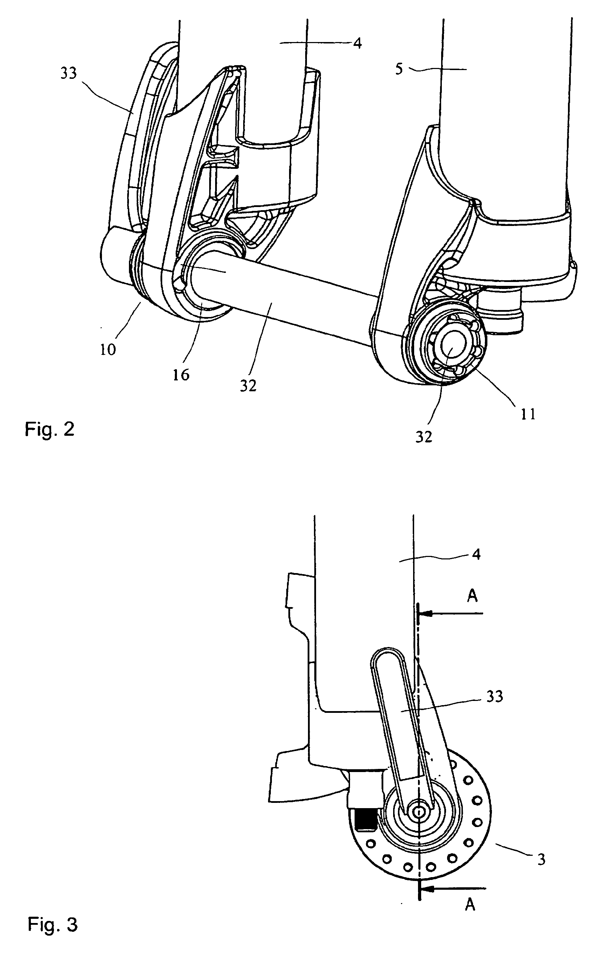

In Figur 2 ist die Fahrradkomponente 1 in einer perspektivischen Darstellung dargestellt, wobei aus Gründen der Übersichtlichkeit die Nabe 3 weggelassen wurde. Die Achse 32 erstreckt sich durch die zylindrischen Aufnahmelöcher 25 in den Aufnahmeeinrichtungen 8 und 9 hindurch, in denen die Buchseneinrichtungen 10 und 11 angeordnet sind.

An der Oberseite der Achse 32 sind axiale Fortsätze bzw. Überstände 26 an den beiden Rohrteilen 4 und 5 vorgesehen, die axial nach innen eine Breite 59 überstehen und Auflager 27 bilden, auf die ein Laufrad bzw. eine Nabe 3 aufgelegt werden kann, wenn das Fahrrad beispielsweise auf dem Kopf steht.

Das erleichtert das Einführen und das Einfädeln der insbesondere als Steckachse ausgebildeten Achse 32 in die Öffnung in den Buchseneinrichtungen, da die Nabe grundsätzlich schon an der richtigen Stelle gehalten wird. Zwar liegt ein kleiner radialer Abstand vor, der hier beispielsweise 0,5 oder 1 mm betragen kann, um eine Berührung der Außenseite der Nabe und des Rohrteils 4 bzw. 5 zu vermeiden, aber die Nabe 3 befindet sich in dieser Position schon etwa an der richtigen Stelle, was das Einfädeln erheblich erleichtert.

Genauso gut wird das Einfädeln auch erleichtert, wenn die Gabel auf das auf dem Boden stehende Rad aufgesetzt wird, da die Auflagen 27 ebenfalls dafür sorgen, dass die Federgabel relativ zur Nabe gut vorpositioniert wird.

In Figur 3 ist eine Seitenansicht dargestellt, in der das Bedienteil 33 nach oben ausgerichtet ist. Im festgezogenen Zustand ist das Bedienteil nicht vollständig drehbar, um eine Verliersicherung und eine Sicherung gegen ein unbeabsichtigtes Lösen der Steckachse zur Verfügung zu stellen.

Insbesondere sind die Abmessungen des Bedienteils und die Abstände von der Euchseneinrichtung 10 derart, dass das Bedienteil zunächst einige Umdrehungen eingeschraubt werden kann, bis die Achse 32 nahezu festgezogen ist. Dabei hat sich das Bedienteil 33 soweit dem Rohrteil 4 angenähert, dass das Bedienteil 33 bei der weiteren Rotation gegen das Rohrteil 4 anstößt. Dann muss zum weiteren Anziehen der Achseneinrichtung der Ratschenmechanismus 37 der Achseneinrichtung 31 betätigt werden und der Bedienhebel 33 gegen die Kraft der Vorspannfeder 38 axial nach außen gezogen werden, sodass die rotationsfeste Verbindung von Achse 32 und Bedienteil 33 aufgehoben wird, da die Axialverzahnungen 49 außer Eingriff geraten.

Anschließend kann das Bedienteil 33 zurückgeschwenkt werden und danach wieder in Eingriff mit der Axialverzahnung 49 gebracht werden, worauf ein weiteres Anziehen der Verbindung möglich ist.

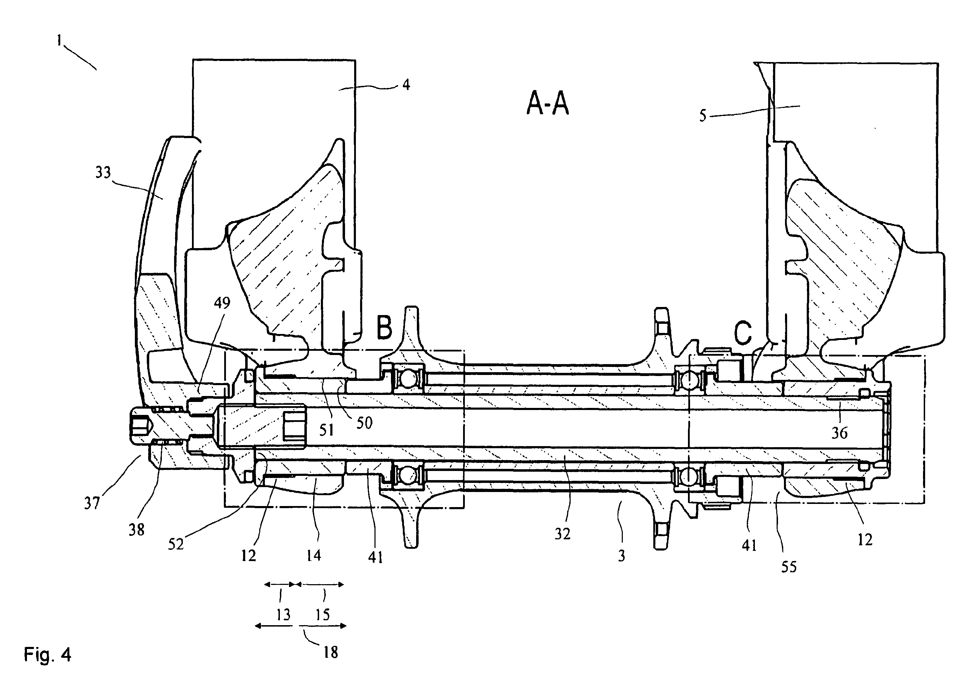

Wie in Figur 4 dargestellt, sind an den axialen Außenseiten der Nabe 3 Adapterstücke 41 vorgesehen, die an den axialen Kontaktflächen mit Rändelscheiben versehen sein können. Die Adapterstücke 41 stoßen mit ihren Kontaktflächen 39 axial gegen die Kontaktflächen 16 der Buchseneinrichtung 10 und 11.

Die Buchseneinrichtungen 10 und 11 weisen Außengewinde 12 auf, die sich über eine axiale Länge 13 erstrecken, an die sich über eine axiale Breite 15 jeweils ein Passsitz 14 abschließt. Die Passsitze 14 sind axial innen vorgesehen, während die Außengewinde 12 an den Buchseneinrichtungen 10 und 11 axial außen an den Rohrteilen 4 und 5 vorgesehen sind. Die Außengewinde 12 greifen in entsprechende Innengewinde in den Rohrteilen 4 und 5 ein. Möglich ist statt dessen auch eine Verklebung oder eine formschlüssige Verbindung.

Insgesamt wird hier über die Außengewinde 12 und die Passsitze 14 eine feste und torsicns- und biegesteife Verbindung erzielt, sodass die Nabe und das Laufrad fest an der Fahrradkomponente aufgenommen ist.

Die beiden axialen Teillängen 13 des Außengewindes 12 und 15 des Passsitzes 14 ergänzen sich zu der axialen Länge 18 der Buchseneinrichtungen 10 und 11.

Während auf der Oberseite 28 der Aufnahmeeinrichtungen 8 und 9 ein axial nach innen ragender Vorsprung bzw. Überstand 26 vorgesehen ist, ist an der unteren Seite ein axialer Rücksprung 55 an den Aufnahmeeinrichtungen 8 und 9 bzw. Rohrteilen 4 und 5 vorgesehen, sodass am untersten Ende der Rohrteile 4 und 5 der axiale Abstand zwischen den Rohrteilen größer ist, als im Bereich der überstände 26 oder im Bereich der Kontaktflächen 50.

Das hat den Vorteil, dass beim Einführen einer Nabe 3 oder eines Laufrades von unten die Rohrteile 4 und 5 bzw. die Aufnahmeeinrichtungen 8 und 9 besser vor Kontakt mit der Nabe 3 geschützt sind, da die zur Verfügung stehende Breite erheblich größer ist als erforderlich. Dadurch wird ein Verschleiß und eine Beschädigung an den unteren Enden der Rohrteile 4 und 5 beim Ein- und Ausbauen der Laufräder weitgehend vermieden, sodass die Lebensdauer steigt.

Insgesamt stehen nur die axialen Kontaktflächen 50 und 52 und die radiale Kontaktfläche 51 mit der Nabe 3 bzw. der Spanneinrichtung der Achseneinrichtung in Berührung. Alle Kontaktflächen sind ausschließlich an den Buchseneinrichtungen 10 und 11 vorgesehen sind, sodass bei etwaigen Verschleißerscheinungen die Buchsen ausgetauscht werden können.

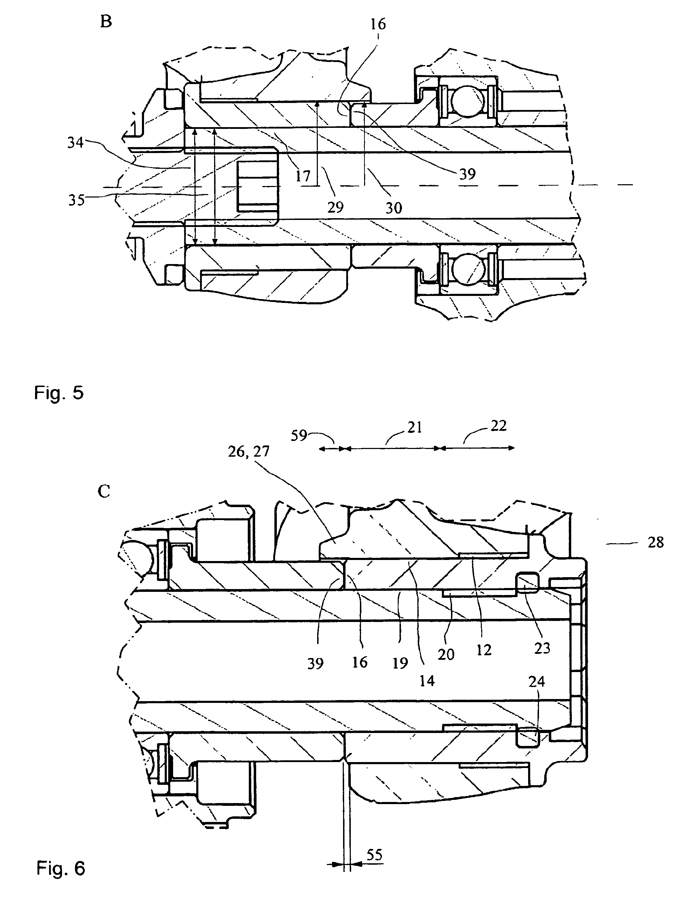

In den Figuren 5 und 6 sind die Details B und C in vergrößerter Darstellung im Schnitt dargestellt. Dabei zeigt die Figur 5 das näher an dem Bedienteil 33 angeordnete Ende der Nabe 3 und einen Ausschnitt aus dem Rohrteil 4. Figur 6 zeigt einen Ausschnitt des Rohrteils 5 und der darin angeordneten Buchseneinrichtung 11.

Die Buchseneinrichtung 10 weist über der gesamten axialen Länge einen Innendurchmesser 35 auf, der an den Außendurchmesser 34 der Achse 32 angepasst ist, sodass dort ein Passsitz 17 vorliegt, der für eine hohe Stabilität und Steifigkeit eines aufgenommenen Laufrades sorgt.

Der Radius 29 der zylindrischen Aufnahmeöffnung 25 entspricht einem Radius 30 des axialen Überstands 26, da die zylindrische Aufnahmeöffnung 25 und der axiale Überstand 26 am Innenumfang in einem Bearbeitungsschritt bearbeitet werden, wodurch die Herstellung vereinfacht wird.

Das andere Buchsenteil 11 verfügt über einen Teil 22 der axialen Länge über ein Innengewinde 20 auf dem Innenumfang, an das sich in axialer Richtung eine axiale Länge 21 anschließt, in der ein Passsitz 19 vorliegt, wozu der Innendurchmesser der Buchseneinrichtung 11 an den Außendurchmesser der Achse 32 entsprechend angepasst ist.

In einem äußeren Bereich benachbart zu dem Gewinde 20 ist eine ringförmige Innennut 23 in der Buchseneinrichtung 11 vorgesehen, in der ein O-Ring 24 angeordnet ist, um eine eventuelle Drehbewegung der Achse 32 zu hemmen.

Insgesamt stellt die Erfindung eine Fahrradkomponente 1 zur Verfügung, die beispielsweise als Vorderradgabel 100 einsetzbar ist, aber auch Anwendung an der Aufnahme des Hinterrades finden kann, wozu die Fahrradkomponente beispielsweise als Rahmen oder Rahmenteil ausgebildet sein, der zur Aufnahme des Hinterrades dient.

### Bezugszeichenliste:

- 1: Fahrradkomponente
- 2: Laufradaufnahme
- 3: Nabe
- 4,5: Rohrteil
- 6,7: Endbereich
- 8,9: Aufnahmeeinrichtung
- 10, 11: Buchseneinrichtung
- 12: Außengewinde
- 13: Teil der axialen Länge
- 14: Passsitz
- 15: Teil der axialen Länge
- 16: axiale Ablagefläche
- 17: Passsitz
- 18: axiale Länge
- 19: Passsitz
- 20: Innengewinde
- 21,22: Teil der axialen Länge
- 23: Umfangsnut
- 24: O-Ring
- 25: Zylindrische Aufnahmeöffnung
- 26: Überstand
- 27: Auflager
- 28: Oberseite
- 29: Radius
- 30: Radius
- 31: Achseneinrichtung
- 32: Achse
- 33: Bedienteil
- 34: Außendurchmesser
- 35: Innendurchmesser
- 36: Gewinde
- 37: Ratschenmechanismus
- 38: Vorspannfeder
- 39: stirnseitige Endfläche
- 41: Adapterstück
- 42: Ausfallende
- 44,45: Standrohr
- 46: Rändelscheibe
- 49: Axialverzahnungen
- 50,51,52: Kontaktfläche
- 55: Rücksprung
- 59: Breite
- 100: Federgabel

## Patentansprüche

1. Fahrradkomponente (1)
mit einer Laufradaufnahme (2), an der ein Laufrad mit einer Nabe (3)aufnehmbar ist,
wobei die Laufradaufnahme (2) wenigstens zwei Rohrteile (4,5) umfasst, an deren Endbereichen (6,7) jeweils eine Aufnahmeeinrichtung (8,9) mit jeweils wenigstens einer Buchseneinrichtung vorgesehen ist, wobei
an der Aufnahmeeinrichtung (8,9) wenigstens eines Rohrteils (4,5) wenigstens eine Buchseneinrichtung (10,11) austauschbar angeordnet ist, **dadurch gekennzeichnet, dass** die wenigstens eine Buchseneinrichtung (10,11) zur Aufnahme und Abstützung einer Nabe (3) geeignet und bestimmt ist,
wobei die Buchseneinrichtung (11) der einen Aufnahmeeinrichtung (8) einen Passsitz auf dem Innenumfang aufweist,
und wobei die Buchseneinrichtung (11) der anderen Aufnahmeeinrichtung (9) einen Passsitz (19) auf dem Innenumfang und axial benachbart dazu ein Innengewinde (20) aufweist, wobei sich der Passsitz (19) und das Innengewinde (20) jeweils über einen Teil (21,22) der axialen Länge der Buchseneinrichtung (11) erstrecken,
wobei die Aufnahmeeinrichtungen (8,9) jeweils axial nach innen hin einen axialen Überstand (26) als Auflager (27) aufweisen.

2. Fahrradkomponente (1)
mit einer Laufradaufnahme (2), an der ein Laufrad mit einer Nabe (3) aufrehmbar ist,
wobei die Laufradaufnahme (2) wenigstens zwei Rohrteile (4,5) umfasst, an deren Endbereichen (6,7) jeweils eine Aufnahmeeinrichtung (8,9) mit jeweils wenigstens einer Buchseneinrichtung vorgesehen ist, wobei
an der Aufnahmeeinrichtung (8,9) wenigstens eines Rohrteils (4,5) wenigstens eine Buchseneinrichtung (10,11) austauschbar angeordnet ist, **dadurch gekennzeichnet, dass** die wenigstens eine Buchseneinrichtung zur Aufnahme und Abstützung einer Nabe (3) geeignet und bestimmt ist, wobei die Buchseneinrichtung (11) der einen Aufnahmeeinrichtung (8) einen Passsitz auf dem Innenumfang aufweist,
und wobei die Buchseneinrichtung (11) der anderen Aufnahmeeinrichtung (9) einen Passsitz (19) auf dem Innenumfang und axial benachbart dazu ein Innengewinde (20) aufweist, wobei sich der Passsitz (19) und das Innengewinde (20) jeweils über einen Teil (21,22) der axialen Länge der Buchseneinrichtung (11) erstrecken,
und wobei die Buchseneinrichtung (11) der anderen Aufnahmeeinrichtung (9) eine innere Umfangsnut (23) mit einem O-ring (24) aufweist.

3. Fahrradkomponente (1) nach Anspruch 1 oder 2, wobei wenigstens eine Buchseneinrichtung (10,11) ein Außengewinde (12) aufweist, welches sich nur über einen Teil (13) der axialen Länge der Buchseneinrichtung (10,11) erstreckt und wobei wenigstens eine Buchseneinrichtung (10,11) einen Passsitz (14) auf der Außenseite aufweist, der sich nur über einen Teil (15) der axialen Länge der Buchseneinrichtung erstreckt.

4. Fahrradkomponente (1) nach einem der vorhergehenden Ansprüche, wobei wenigstens eine Buchseneinrichtung (10,11) in die Aufnahmeeinrichtung (8,9) eingeklebt ist und/oder formschlüssig darin aufgenommen ist.

5. Fahrradkomponente (1) nach einem der vorhergehenden Ansprüche, wobei der Passsitz (17) auf dem Innenumfang der Buchseneinrichtung (10) der einen Aufnahmeeinrichtung (8) sich über die gesamte axiale Länge (18) der Buchseneinrichtung erstreckt.

6. Fahrradkomponente nach einem der vorhergehenden Ansprüche, wobei die Auflager (27) insbesondere sichelförmig gestaltet und im Wesentlichen auf der Oberseite (28) der Aufnahmeeinrichtung (8,9) vorgesehen sind.

7. Fahrradkomponente nach einem der vorhergehenden Ansprüche, wobei ein Radius (29) der zylindrischen Aufnahmeöffnung (25) einem Radius (30) des axialen Überstands (26) entspricht und/oder wobei die zylindrische Aufnahmeöffnung (25) und der axiale Überstand (26) am Innenumfang mit einem Bearbeitungsschritt bearbeitet werden.

8. Fahrradkomponente (1) nach einem der vorhergehenden Ansprüche, wobei umfassend eine Achseneinrichtung (31) mit einer Achse (32) und einem Bedienteil (33), wobei das Bedienteil (33) nach außen von der Achse (32) absteht und mit einem Gewinde (20, 36) zusammenwirkt, um bei der Drehung des Bedienteils (33) die Achseneinrichtung (31) zu spannen und wobei das Bedienteil (33) derart dicht an einem Rohrteil (4,5) angeordnet ist, dass das Rohrteil (4,5) in den Schwenkbereich des Bedienteils (33) hineinragt.

9. Fahrradkomponente (1) nachAnspruch 8, wobei das Bedienteil (33) beim Festziehen zunächst vollständig drehbar ist und sich beim Festziehen an das Rohrteil annähert bis das Bedienteil (33) derart dicht an einem Rohrteil (4,5) angeordnet ist, dass das Rohrteil (4,5) in den Schwenkbereich des Bedienteils (33) hineinragt.

10. Fahrradkomponente (1) nach einem der vorhergehenden Ansprüche 8 oder 9, wobei an der Achseneinrichtung (31) ein Ratschenmechanismus (37) vorgesehen ist, wobei das Bedienteil (33) axial gegen die Vorspannkraft einer Vorspanneinrichtung (38) nach außen bewegbar ist, um das Bedienteil (33) außer Eingriff mit der Achse (32) zu bringen, sodass das Bedienteil (33) drehbar, ist, ohne die Drehbewegung auf das Gewinde (36) zu übertragen.

11. Fahrradkomponente (1)nach mindestens einem der vorhergehenden Ansprüche mit einer daran aufgenommenen Nabe (3) und einer feststehenden Achse (32).

12. Fahrradkomponente (1) nach Anspruch 11, wobei die Aufnahmeeinrichtungen (8,9) jeweils axial nach innen hin einen axialen Überstand (26) als Auflager (27) aufweisen, der von der Nabe (3) und insbesondere Adapterstücken (41) der Nabe (3) radial beabstandet ist.

13. Fahrradkomponente (1) nach einem der vorhergehenden Ansprüche, wobei wenigstens eine Buchseneinrichtung (10,11) aus Metall und insbesondere aus einer harteloxierten Aluminiumlegierung, einem Stahl oder einer Titanlegierung besteht und wobei wenigstens ein Rohrteil (4,5) aus einem Faserverbundwerkstoff besteht.

14. Fahrradkomponente (1) nach einem der vorhergehenden Ansprüche 11 bis 13, wobei Kontaktflächen (16) zwischen Nabe (3) und Laufradaufnahme (2) an den Buchseneinrichtungen (10,11) ausgebildet sind und wobei die Kontaktflächen (50, 51, 52) zwischen Achse (32) und Laufradaufnahme (2) an den Buchseneinrichtungen (10,11) ausgebildet sind.

15. Vorderradgabel (100) mit wenigstens einer Fahrradkomponente nach mindestens einem der vorhergehenden Ansprüche.

## Claims

1. A bicycle component (1)
comprising a wheel mount (2) at which a wheel with a hub (3) can be received,
wherein the wheel mount (2) comprises at least two tube components (4, 5), at the end portions (6, 7) of which one mounting device (8, 9) each having at least one bushing device is provided, wherein
the mounting device (8, 9) of at least one tube component (4, 5) has at least one bushing device (10, 11) exchangeably arranged thereat,
**characterized in that** the at least one bushing device (10, 11) is suitable and intended to receive and support a hub (3),
wherein the bushing device (11) of the one mounting device (8) comprises a snug fit on the inner periphery,
and wherein the bushing device (11) of the other mounting device (9) comprises a snug fit (19) on the inner periphery and axially adjacent thereto a female thread (20) with both the snug fit (19) and the female thread (20) extending over part (21, 22) of the axial length of the bushing device (11),
wherein the mounting devices (8, 9) axially inwardly comprise an axial projecting edge (26) as an end bearing (27).

2. A bicycle component (1)
comprising a wheel mount (2) at which a wheel with a hub (3) can be received,
wherein the wheel mount (2) comprises at least two tube components (4, 5), at the end portions (6, 7) of which one mounting device (8, 9) each having at least one bushing device is provided, wherein
the mounting device (8, 9) of at least one tube component (4, 5) has at least one bushing device (10, 11) exchangeably arranged thereat,
**characterized in that** the at least one bushing device (10, 11) is suitable and intended to receive and support a hub (3),
wherein the bushing device (10) of the one mounting device (8) comprises a snug fit (17) on the inner periphery,
and wherein the bushing device (11) of the other mounting device (9) comprises a snug fit (19) on the inner periphery and axially adjacent thereto a female thread (20) with both the snug fit (19) and the female thread (20) extending over part (21, 22) of the axial length of the bushing device (11)
and wherein the bushing device (11) of the other mounting device (9) comprises an internal peripheral groove (23) with an O-ring (24).

3. The bicycle component (1) according to claim 1 or 2 wherein at least one bushing device (10, 11) comprises a male thread (12) extending only over part (13) of the axial length of the bushing device (10, 11) and wherein at least one bushing device (10, 11) comprises on the outer surface a snug fit (14) extending only over part (15) of the axial length of the bushing device.

4. The bicycle component (1) according to any of the preceding claims wherein at least one bushing device (10, 11) is glued and/or form-fittingly received in the mounting device (8, 9).

5. The bicycle component (1) according to any of the preceding claims wherein the snug fit (17) on the inner periphery of the bushing device (10) of the one mounting device (8) extends over the entire axial length (18) of the bushing device.

6. The bicycle component according to any of the preceding claims, wherein the end bearings (27) are configured in particular sickle-shaped and are substantially provided on the upper side (28) of the mounting device (8, 9).

7. The bicycle component according to any of the preceding claims wherein a radius (29) of the cylindrical mounting opening (25) corresponds to a radius (30) of the axial projecting edge (26) and/or wherein the cylindrical mounting opening (25) and the axial projecting edge (26) at the inner periphery are machined in one process step.

8. The bicycle component according to any of the preceding claims wherein comprising an axle device (31) with an axle (32) and an operating member (33), wherein the operating member (33) protrudes from the axle (32) outwardly, interacting with a thread (20, 36) so as to tighten the axle device (31) as the operating member (33) is rotated and wherein the operating member (33) is positioned close enough to a tube component (4, 5) for the tube component (4, 5) to protrude into the pivot range of the operating member (33).

9. The bicycle component (1) according to claim 8 wherein the operating member (33) can first rotate entirely freely in tightening, approaching the tube component in tightening until the operating member (33) is positioned close enough to a tube component (4, 5) for the tube component (4, 5) to protrude into the pivot range of the operating member (33).

10. The bicycle component (1) according to any of the preceding claims 8 or 9 wherein the axle device (31) is provided with a ratchet mechanism (37), wherein the operating member (33) is axially movable outwardly against the biasing force of a biasing device (38) to bring the operating member (33) out of engagement with the axle (32) such that the operating member (33) can be rotated without transmitting the rotational movement to the thread (36).

11. The bicycle component (1) according to at least one of the preceding claims comprising received thereat a hub (3) and a fixed axle (32).

12. The bicycle component (1) according to claim 11 wherein the mounting devices (8, 9) comprise axially inwardly an axially projecting edge (26) as an end bearing (27) at a radial distance from the hub (3) and in particular from adapting pieces (41) of the hub (3).

13. The bicycle component (1) according to any of the preceding claims wherein at least one bushing device (10, 11) consists of a metal and in particular of a hard anodized aluminum alloy, of steel or of a titanium alloy and wherein at least one tube component (4, 5) consists of a fibrous composite material.

14. The bicycle component (1) according to any of the preceding claims 11 to 13 wherein contact surfaces (16) are configured on the bushing devices (10, 11) between the hub (3) and the wheel mount (2) and wherein the contact surfaces (50, 51, 52) between the axle (32) and the wheel mount (2) are configured on the bushing devices (10, 11).

15. Front wheel fork (100) comprising at least one bicycle component according to at least one of the preceding claims.

## Revendications

1. Composant de bicyclette (1) comprenant un logement de roue (2) sur lequel peut être reçue une roue avec un moyeu (3), ledit logement de roue (2) comprenant au moins deux éléments tubulaires (4, 5) sur les zones d'extrémité (6, 7) desquels est prévu respectivement un dispositif de réception (8, 9) avec chacun au moins un dispositif en douille, sur ledit dispositif de réception (8, 9) d'au moins un élément tubulaire (4, 5) étant disposé de façon échangeable au moins un dispositif en douille (10, 11), **caractérisé par le fait que** ledit au moins un dispositif en douille (10, 11) est apte et destiné à recevoir et à appuyer un moyeu (3), ledit dispositif en douille (11) de l'un (8) des dispositifs de réception présentant un ajustement fin sur la circonférence intérieure, et le dispositif en douille (11) de l'autre dispositif de réception (9) présentant un ajustement fin (19) sur la circonférence intérieure et, axialement contigu à celui-ci, un taraudage (20), ledit ajustement fin (19) et ledit taraudage (20) s'étendant respectivement sur une partie (21, 22) de la longueur axiale du dispositif en douille (11), les dispositifs de réception (8, 9) présentant chacun axialement vers l'intérieur une saillie axiale (26) en tant qu'appui (27).

2. Composant de bicyclette (1) comprenant un logement de roue (2) sur lequel peut être reçue une roue avec un moyeu (3), ledit logement de roue (2) comprenant au moins deux éléments tubulaires (4, 5) sur les zones d'extrémité (6, 7) desquels est prévu respectivement un dispositif de réception (8, 9) avec chacun au moins un dispositif en douille, sur ledit dispositif de réception (8, 9) d'au moins un élément tubulaire (4, 5) étant disposé de façon échangeable au moins un dispositif en douille (10, 11), **caractérisé par le fait que** ledit au moins un dispositif en douille est apte et destiné à recevoir et à appuyer un moyeu (3), ledit dispositif en douille (11) de l'un (8) des dispositifs de réception présentant un ajustement fin sur la circonférence intérieure, et le dispositif en douille (11) de l'autre dispositif de réception (9) présentant un ajustement fin (19) sur la circonférence intérieure et, axialement contigu à celui-ci, un taraudage (20), ledit ajustement fin (19) et ledit taraudage (20) s'étendant respectivement sur une partie (21, 22) de la longueur axiale du dispositif en douille (11), et le dispositif en douille (11) de l'autre dispositif de réception (9) présentant une rainure circonférentielle intérieure (23) avec un joint torique (24).

3. Composant de bicyclette (1) selon la revendication 1 ou 2, dans lequel au moins un dispositif en douille (10, 11) présente un filet extérieur (12) qui ne s'étend que sur une partie (13) de la longueur axiale du dispositif en douille (10, 11), et dans lequel au moins un dispositif en douille (10, 11) présente un ajustement fin (14) sur la face extérieure, qui ne s'étend que sur une partie (15) de la longueur axiale du dispositif en douille.

4. Composant de bicyclette (1) selon l'une quelconque des revendications précédentes, dans lequel au moins un dispositif en douille (10, 11) est collé dans ledit dispositif de réception (8, 9) et/ou est reçu à engagement positif dans celui-ci.

5. Composant de bicyclette (1) selon l'une quelconque des revendications précédentes, dans lequel l'ajustement fin (17) sur la circonférence intérieure du dispositif en douille (10) de l'un (8) des dispositifs de réception s'étend sur toute la longueur axiale (18) du dispositif en douille.

6. Composant de bicyclette selon l'une quelconque des revendications précédentes, dans lequel les appuis (27) sont configurés en particulier en forme de croissant et sont prévus pour l'essentiel sur la face supérieure (28) du dispositif de réception (8, 9).

7. Composant de bicyclette selon l'une quelconque des revendications précédentes, dans lequel un rayon (29) de l'ouverture cylindrique de réception (25) correspond à un rayon (30) de ladite saillie axiale (26) et/ou dans lequel l'ouverture cylindrique de réception (25) et ladite saillie axiale (26) sur la circonférence intérieure sont usinées en une étape d'usinage.

8. Composant de bicyclette (1) selon l'une quelconque des revendications précédentes, comprenant un dispositif d'axe (31) avec un axe (32) et un organe de commande (33), dans lequel ledit organe de commande (33) faisant saillie vers l'extérieur depuis ledit axe (32) et agit de concert avec un filet (20, 36) afin de serrer ledit dispositif d'axe (31) lors de la rotation dudit organe de commande (33), et dans lequel ledit organe de commande (33) est disposé de manière étanche sur un élément tubulaire (4, 5) de telle sorte que ledit élément tubulaire (4, 5) se projette dans la zone de pivotement de l'organe de commande (33).

9. Composant de bicyclette (1) selon la revendication 8, dans lequel ledit organe de commande (33) peut, lors du serrage, être tourné d'abord complètement et s'approche, lors du serrage, de l'élément tubulaire jusqu'à ce que l'organe de commande (33) soit disposé de manière étanche sur un élément tubulaire (4, 5) de telle sorte que ledit élément tubulaire (4, 5) se projette dans la zone de pivotement de l'organe de commande (33).

10. Composant de bicyclette (1) selon l'une quelconque des revendications précédentes 8 ou 9, dans lequel un mécanisme à cliquet (37) est prévu sur ledit dispositif d'axe (31), ledit organe de commande (33) pouvant être déplacé vers l'extérieur axialement contre la force de précontrainte d'un dispositif de précontrainte (38) de manière à ce que ledit organe de commande (33) soit mis hors prise de l'axe (32) de sorte que l'on peut tourner l'organe de commande (33) sans transmettre le mouvement de rotation au filet (36).

11. Composant de bicyclette (1) selon l'une au moins des revendications précédentes, comprenant un moyeu (3) y reçu et un axe fixe (32).

12. Composant de bicyclette (1) selon la revendication 11, dans lequel lesdits dispositifs de réception (8, 9) présentent chacun axialement vers l'intérieur une saillie axiale (26) en tant qu'appui (27) qui est espacée radialement du moyeu (3) et en particulier de pièces adaptatrices (41) du moyeu (3).

13. Composant de bicyclette (1) selon l'une quelconque des revendications précédentes, dans lequel au moins un dispositif en douille (10, 11) est réalisé en métal et en particulier dans un alliage d'aluminium oxydé électrolytiquement dur, un acier ou un alliage de titane et dans lequel au moins un élément tubulaire (4, 5) est réalisé dans un matériau composite fibreux.

14. Composant de bicyclette (1) selon l'une quelconque des revendications précédentes 11 à 13, dans lequel des surfaces de contact (16) entre le moyeu (3) et le logement de roue (2) sont réalisées sur les dispositifs en douille (10, 11) et dans lequel les surfaces de contact (50, 51, 52) entre l'axe (32) et le logement de roue (2) sont réalisées sur les dispositifs en douille (10, 11).

15. Fourche de roue avant (100) comprenant au moins un composant de bicyclette selon l'une au moins des revendications précédentes.
